# FASCICULE DE BREVET EUROPEEN

(11) **EP 1 439 997 B1**
(45) Date de publication et mention de la délivrance du brevet: **01.02.2006**
(21) Numéro de dépôt: 02765248.6
(22) Date de dépôt: 13.09.2002
(51) Int. Cl.: B62K 3/02

(54) **APPAREIL DE MESURE**
MESSVORRICHTUNG
MEASURING APPARATUS

(30) Priorité: 14.09.2001 CH 169501
(43) Date de publication de la demande: 28.07.2004
(73) Titulaire: Winkenbach, Laurent, 2400 Le Locle (CH); Ferraroli, Alessandro, 6963 Pregassona (CH)
(72) Inventeur: Winkenbach, Laurent, 2400 Le Locle (CH); Ferraroli, Alessandro, 6963 Pregassona (CH)
(74) Mandataire: Gresset, Jean
(86) Numéro de dépôt international: PCT/IB2002/003776
(87) Numéro de publication internationale: WO 2003/024772

(56) Documents cités:
- FR-A- 2 348 098
- FR-A- 2 495 307
- US-A- 3 664 027
- PATENT ABSTRACTS OF JAPAN vol. 008, no. 129 (P-280), 15 juin 1984 (1984-06-15) -& JP 59 032801 A (JITENSHIYA SANGYO SHINKOU KIYOUKAI), 22 février 1984 (1984-02-22)

## Description

La présente invention se rapporte à un appareil de mesure du type destiné à déterminer les dimensions d'un vélo de manière à ce qu'il soit parfaitement adapté à son utilisateur. Un tel appareil (voix par exemple le document de l'art antérieur FR-A-2 348 098) comporte :
■ un socle servant de base,
■ un cadre disposé sur le socle et, montés sur le cadre,
■ une potence munie d'un guidon servant d'appui aux bras,
■ une selle permettant à l'utilisateur de s'asseoir,
■ un pédalier, muni de pédales servant d'appui aux pieds, et mobile en rotation autour d'un axe horizontal,
■ un dispositif de freinage et de mesure, relié cinématiquement au pédalier, pour ajuster et mesurer l'effort effectué par l'utilisateur, et
■ des moyens de réglage d'une partie au moins des dimensions de l'appareil.

Un tel appareil permet de déterminer, au travers de tests successifs, les conditions d'utilisation du vélo par un athlète. Il a, en effet, été constaté que le dimensionnement d'un vélo peut certes s'effectuer sur la base d'une analyse anthropométrique, et plus particulièrement de la structure de l'ossature. Cela ne suffit toutefois pas toujours, car la musculature joue aussi un rôle important. Il est donc nécessaire d'effectuer des tests statiques et dynamiques, ce que permet l'appareil décrit ci-dessus.

Au cours de ces tests, les dimensions du cadre, de la potence, du guidon, du pédalier ainsi que la position de la selle, sont modifiées, jusqu'à trouver un optimum. Cette optimisation nécessite de nombreux tâtonnements et une expérience très grande pour détecter les disfonctionnements notamment les dissymétries dans le mouvement. Le but de la présente invention est de faciliter les opérations de réglage. Ce but est atteint grâce au fait que l'appareil comporte, en outre au moins un capteur de force disposé sur l'un des points d'appui et un dispositif de mesure relié au capteur de force pour déterminer la force appliquée par l'utilisateur et son évolution dans le temps.

Parmi les points d'appui, les pédales jouent un rôle important. C'est sur elles que l'essentiel de l'effort est appliqué. Pour obtenir le rendement maximum, il est nécessaire que la chaussure soit parfaitement disposée sur la pédale. C'est pourquoi le capteur est agencé pour coopérer avec le pédalier.

Afin de permettre une mesure statique de la pression exercée sur les pédales, l'appareil comporte, en outre, un appui de pédalier amovible, et le capteur est agencé pour mesurer au moins la composante verticale de la force appliquée statiquement sur au moins l'une des pédales.

De manière avantageuse, le capteur est agencé pour mesurer aussi la composante horizontale de la force qui est perpendiculaire à l'axe de rotation du pédalier.

Un tel appareil est généralement équipé d'une chaîne qui relie le pédalier au dispositif de freinage. De manière avantageuse, les variations du couple sont mesurées au moyen d'un capteur disposé pour mesurer la tension de la chaîne.

Le confort sur route dépend sensiblement de la manière dont l'utilisateur est en appui sur son guidon. Il est, par exemple possible que l'appui se fasse sur un côté plus que sur l'autre. Il peut en résulter un surcroît de fatigue sur le côté le plus sollicité. C'est pourquoi il est utile qu'un capteur soit associé au guidon. De manière avantageuse, ce capteur comporte une pluralité de membranes munies chacune de senseurs de pression, disposées en chacun des points d'appui des mains sur le guidon.

La position sur la selle revêt aussi une grande importance, le contact devant être régulier, mais avec un appui minimum au niveau du périnée. Pour permettre l'adéquation de la selle à son utilisateur, un capteur, solidaire de la selle, comporte une membrane munie d'une pluralité de senseurs répartis sur la surface de la selle, pour permettre une mesure locale de la pression.

Pour la mise en évidence de certains dysfonctionnements, il est nécessaire de connaître pour quelle position angulaire du pédalier se produit un événement particulier. C'est pourquoi l'appareil comporte, en outre, un détecteur de position coopérant avec le pédalier pour connaître sa position angulaire en référence au support.

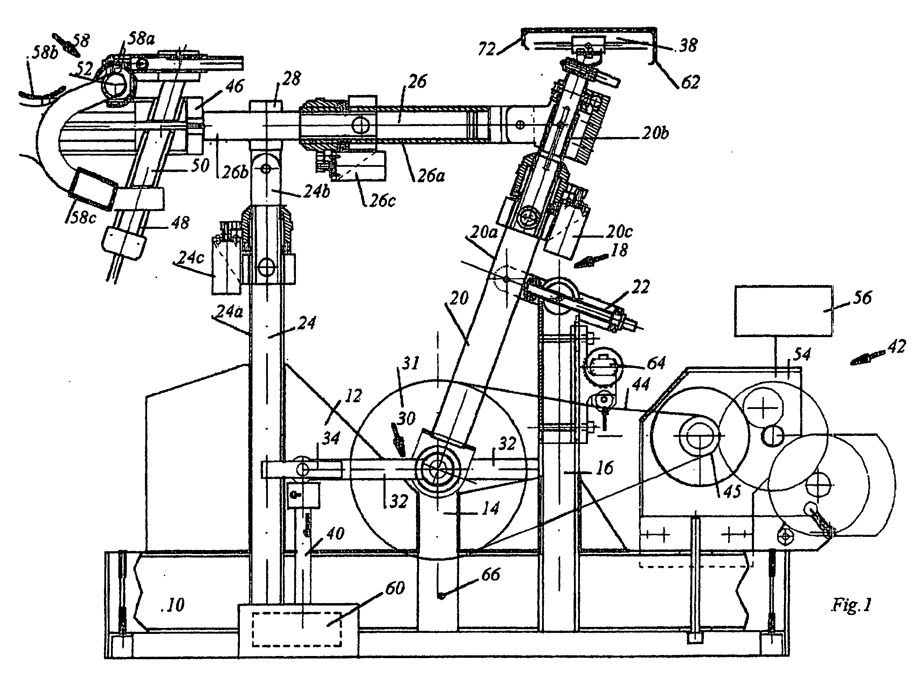

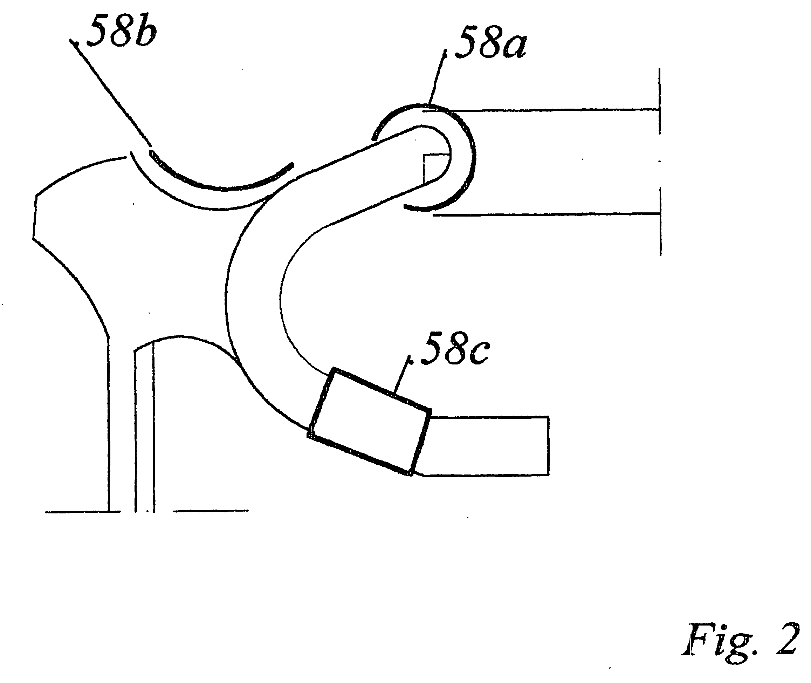

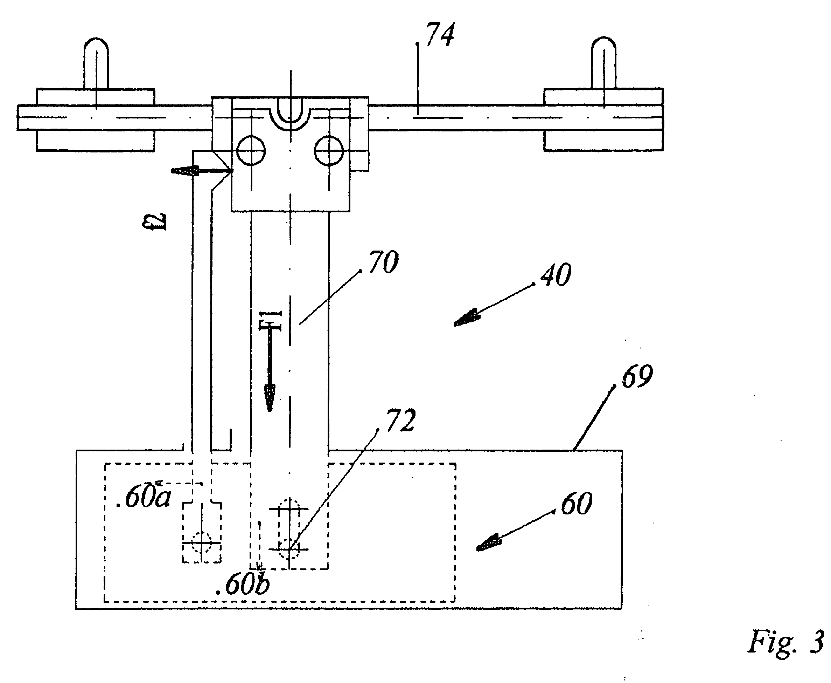

D'autres avantages et caractéristiques de l'invention ressortiront de la description qui va suivre, faite en regard du dessin annexé, dans lequel:
■ La figure 1 représente un appareil de mesure selon l'invention ; et
■ Les figures 2 et 3 des parties de cet appareil.

Comme le montre la figure 1, l'appareil selon l'invention comporte un socle 10 assurant sa stabilité sur le sol. Ce socle 10 comporte trois piliers portant les références 12, 14 et 16, qui supportent un cadre 18.

Le cadre 18 comprend un tube montant 20, monté basculant sur le pilier 14 et coopérant avec le pilier 16 par l'intermédiaire d'un appui réglable 22 pour permettre l'ajustement de l'inclinaison du tube 20 en référence au socle 10, une barre verticale 24 fixée rigidement au pilier 12 et une barre horizontale 26, dont une extrémité est solidaire de l'extrémité supérieure du tube montant 20, et dont la partie médiane est engagée dans un anneau 28 que comporte l'extrémité supérieure de la barre verticale 24.

Le tube 20 et les barres 24 et 26 comprennent deux parties identifiées par les lettres a et b, disposées dans le prolongement l'une de l'autre, et un organe d'ajustement, identifié par la lettre c et permettant de déplacer les parties a et b en référence l'une avec l'autre.

Un pédalier 30 est monté rotatif sur le pilier 14, autour d'un axe confondu avec l'axe de basculement du tube montant 20. Il comporte un plateau 31, deux manivelles 32 et deux pédales 34, chacune disposée à l'extrémité de l'une des manivelles 32.

Une selle 38 est fixée à l'extrémité supérieure du tube montant 20. Elle comporte des moyens de réglage permettant de la déplacer d'avant en arrière et de l'incliner. Ces moyens étant bien connus de l'homme du métier, ils ne seront, en conséquence, pas décrits de manière plus détaillée.

Le socle 10 porte encore des appuis de pédale 40, rétractables et mobiles d'avant en arrière, et destinés à mesurer la pression statique exercée par l'utilisateur lorsque la manivelle est horizontale. Ces appuis seront décrits de manière détaillée en référence à la figure 3. Un dispositif de freinage et de mesure 42 est placé à l'arrière du pilier 16 et relié à au plateau 31 par une chaîne 44 et par une roue dentée 45.

La barre horizontale 26 est munie, à son extrémité opposée à celle solidaire du tube montant 20, d'un support de tube de guidon 46, dans lequel est engagé un tube de guidon 48. Ce dernier sert de logement à une potence 50, laquelle porte un guidon 52.

Le dispositif de mesure et de freinage 42 comprend essentiellement une génératrice 54, entraînée en rotation par la roue 45, et une électronique de gestion 56 agencée pour permettre un réglage du couple de freinage. L'électronique 56 permet, en outre de déterminer le couple appliqué et l'énergie fournie en fonction du temps, le rythme cardiaque de la personne et l'affichage de ces informations.

Un tel appareil permet d'adapter les dimensions d'un vélo à l'organisme d'un utilisateur, et plus particulièrement celles du cadre, du pédalier et du guidon, ainsi que la position de la selle. Pour ce faire, l'utilisateur prend place sur l'appareil. De manière avantageuse, celui-ci aura été pré-réglé à partir des mesures faites au moyen de l'appareil décrit dans la demande de brevet EP-A-1 095 616 intitulée «Dispositif de mesure anthropométrique». Ainsi installée, la personne pédale dans des conditions pouvant être modifiées, simulant, par exemple, un parcours à plat ou en montée, à faible vitesse ou à effort maximum. L'observation des mouvements lors du pédalage permet de détecter des postures susceptibles de poser problème lorsque la personne pratique le vélo de manière intensive. Cette observation est toutefois très délicate et nécessite beaucoup d'expérience.

Il est apparu qu'il est possible de faciliter le travail d'optimisation en munissant l'appareil de capteurs permettant de mesurer la répartition des forces appliquées par la personne aux différents points sur lesquels elle s'appuie. L'appareil représenté au dessin comporte, plus précisément, trois capteurs 58, 60 et 62, respectivement associés au guidon 52, à l'appui de pédale 40 et à la selle 38, un capteur 64 de tension de la chaîne, ainsi qu'un détecteur 66 de position du pédalier. Ces capteurs sont reliés électriquement, par des moyens non représentés au dessin, à l'électronique de gestion 56, avantageusement constituée d'un ordinateur ou d'un microprocesseur.

Le guidon 52, équipé du capteur 58, est représenté de manière plus détaillée sur la figure 2. Comme on peut le voir sur cette figure, le capteur 52 est formé de plusieurs membranes 58a, 58b et 58c, munies de senseurs de pression intégrés. Les membranes sont fixées sur les points d'appui des mains sur le guidon, respectivement au voisinage de la potence, sur les cocottes et sur le cintre du guidon. Ces senseurs peuvent être de n'importe quel type nécessitant une faible épaisseur, de manière à ce que les conditions d'appui ne soient pas affectées. L'électronique de gestion 56, à laquelle ils sont reliés, intègre les pressions mesurées par chacun de ces senseurs, détermine la force appliquée par chacune des mains sur le guidon 52 en l'un et/ou l'autre des points d'appui.

En variante, il est aussi possible de disposer le capteur 58 sur la potence 50, et utiliser des jauges de contraintes disposées de manière orthogonale. Ces jauges sont ainsi placées de manière telle qu'il est possible de connaître l'intensité et la direction de la force d'appui de la personne sur le guidon. Cette information est obtenue après traitement des signaux reçus par l'électronique de gestion 56.

La figure 3 montre, de manière plus détaillée, un appui de pédale 40. Ce dernier comporte, en plus du capteur 60, une embase 69, une béquille 70 une liaison mobile 72 de la béquille 70 sur l'embase 69, et un organe d'accouplement 74, assurant une liaison rigide entre la pédale 34 et la béquille 70, de manière à pouvoir mesure les deux composantes de la force appliquée sur la pédale, l'une verticale, l'autre horizontale, et qui sont perpendiculaires à l'axe de rotation du pédalier 30.

Le capteur 60 comporte deux jauges de contraintes 60a et 60b, respectivement destinées à mesurer la composante horizontale et la composante verticale de la force appliquée. Ces jauges sont du même type que celles utilisées dans les balances, choisies de manière à pouvoir supporter une charge d'environ un millier de Newton. Elles sont reliées à l'électronique de gestion 68. Il va de soi que chacune des pédales peut être associée à un appui 40, de manière à pouvoir effectuer, successivement, une mesure statique pour chaque pied.

Dans une variante qui n'a pas été représentée, le capteur 60 pourrait être solidaire des manivelles 32, formé de trois senseurs disposés orthogonalement pour chaque manivelle, assurant une mesure dynamique de l'intensité et de l'orientation de la force appliquée sur chaque manivelle.

Dans ce cas, le capteur est relié à un circuit destiné à transformer les signaux, issus des senseurs, en un signal électromagnétique transmis à l'électronique de gestion 56 au moyen d'une bobine à induction et d'une antenne.

En mesurant ainsi la force appliquée par les pieds sur les pédales, de manière statique et/ou dynamique, il est possible de déterminer si la plaquette de fixation de la chaussure sur la pédale se trouve dans la bonne position. Si ce n'est pas le cas, la position de la plaquette peut alors être ajustée et une nouvelle mesure est effectuée, pour vérifier que la correction était adéquate.

La selle 38 telle que représentée sur la figure 1 est recouverte d'un coussin 72 formé d'une membrane, munie de senseurs de pression, du même type que celle utilisée pour le capteur 58. Les senseurs sont disposés de manière régulière sur la face du coussin en contact avec la selle proprement dite. Ils forment ainsi le capteur 62 et sont reliés à l'électronique de gestion 56. Ils permettent de déterminer la manière dont le contact se fait entre le fessier de la personne et la selle, et surtout de déterminer si la charge est bien répartie.

Le capteur 64 permet de déterminer la manière dont le couple moteur est appliqué par l'utilisateur au cours du temps. Il s'agit aussi d'une jauge de contrainte, mesurant une force perpendiculaire à la chaîne 44.

Le détecteur 66 est formé d'une cellule photo-électrique agencée pour réagir à chaque passage de l'une des manivelles 32. Il est ainsi possible de savoir, sur les diagrammes de mesure fournis par l'électronique 56, à quel moment l'une des pédales passe par un point donné, avantageusement son point le plus bas.

Ainsi, chacun des capteurs 58, 60 et 62 permet de contrôler que la position de la personne sur le vélo est correcte. La comparaison des informations recueillies par les différents capteurs permet donc de mettre en évidence des postures inadéquates et de les corriger par un ajustement de l'une ou l'autre des cotes proposées pour la réalisation du vélo. Ces cotes peuvent alors être modifiées progressivement de manière à ce qu'un optimum soit trouvé.

La comparaison des forces appliquées aux différents points d'appui permet ainsi d'établir des tableaux de diagnostiques qui montrent comment varient les différentes forces appliquées en fonction du temps et les corrections à apporter lorsque les mesures faites ne correspondent pas à l'optimum.

Ainsi, en munissant l'appareil de mesure de capteurs associé à au moins un des points d'appui de la personne, il est possible d'optimiser tout ou partie des dimensions du vélo de manière à ce que celui soit le plus parfaitement possible adapté à cette personne, prenant en compte ses spécificités physiologiques et permettant d'éviter ainsi des problèmes liés à une sollicitation exagérée de l'un ou l'autre muscle ou organe.

## Revendications

1. Appareil de mesure, pour dimensionner les composants d'un vélo en fonction de son utilisateur, du type comportant :
• un socle (10) servant de base
• un cadre (12) disposé sur le socle et, montés sur le cadre,
• une potence (50) muni d'un guidon (52) servant d'appui aux bras,
• une selle (38) servant d'appui au fessier,
• un pédalier (30), muni de pédales (34) servant d'appui aux pieds, et mobile en rotation autour d'un axe horizontal,
• un dispositif de freinage et de mesure (42), relié cinématiquement au pédalier (30), pour ajuster et mesurer l'effort effectué par l'utilisateur, et
• des moyens de réglage (20c, 24c, 26c) d'une partie au moins des dimensions de l'appareil
**caractérisé en ce qu'**il comporte, en outre, au moins un capteur de force (58, 60, 62) disposé sur l'un des points d'appui et une électronique de gestion (56) reliée au capteur de force pour déterminer la force appliquée par l'utilisateur et son évolution dans le temps.

2. Appareil selon la revendication 1, **caractérisé en ce que** un capteur (60) est agencé pour coopérer avec ledit pédalier (30).

3. Appareil selon la revendication 2, **caractérisé en ce que** ledit appareil comporte, en outre, un appui de pédalier amovible (40), et **en ce que** ledit capteur (60) est agencé pour mesurer au moins la composante verticale de la force appliquée statiquement sur au moins l'une desdites pédales (34).

4. Appareil selon la revendication 3, **caractérisé en ce que** le capteur (60) est agencé pour mesurer aussi la composante horizontale de la force qui est perpendiculaire à l'axe de rotation du pédalier (30).

5. Appareil selon l'une des revendications 1 à 4, **caractérisé en ce qu'**il comporte, en outre, une chaîne (44) reliant le pédalier (30) au dispositif de freinage et un capteur (64) agencé pour mesurer la tension de ladite chaîne.

6. Appareil selon l'une des revendications 1 à 5, **caractérisé en ce qu'**un capteur (58) est associé au guidon (52).

7. Appareil selon la revendication 5, **caractérisé en ce que** ledit capteur comporte une pluralité de membranes (58a, 58b, 58c) munies chacune de senseurs de pression, disposées en chacun des points d'appui des mains sur le guidon.

8. Appareil selon l'une des revendications 1 à 7, **caractérisé en ce qu'**un capteur est disposé sur la selle (38) et comporte une membrane (72) munie d'une pluralité de senseurs répartis sur la surface de la selle, pour permettre une mesure locale de la pression.

9. Appareil selon l'une des revendications 1 à 8, **caractérisé en ce qu'**il comporte, en outre, un détecteur de position (66) coopérant avec le pédalier (30) pour connaître sa position angulaire en référence au support (10).

## Claims

1. A measuring apparatus for determining the dimensions of the components of a bicycle according to its user, of the type including:
■ a stand (10) serving as a base
■ a frame (12) arranged on the base and, mounted on the frame,
■ a stem (50) equipped with handlebars (52) serving as a support for the arms,
■ a saddle (38) serving as a support for the buttocks,
■ a crankset (30), fitted with pedals (34) serving as a support for the feet, and able to move in rotation about a horizontal axis,
■ a braking and measuring device (42), kinematically connected to the crankset (30), for adjusting and measuring the effort exerted by the user, and
■ means for adjusting (20c, 24c, 26c) at least part of the dimensions of the apparatus
**characterised in that** said apparatus further includes at least one force sensor (58, 60, 62) arranged on one of the bearing points and an electronic control unit (56) connected to the force sensor for determining the force applied by the user and its development over time.

2. An apparatus according to claim 1, **characterised in that** a sensor (60) is arranged to co-operate with said crankset (30).

3. An apparatus according to claim 2, **characterised in that** said apparatus further includes a removable crankset support (40), and wherein said sensor (60) is arranged for measuring at least the vertical component of the force statically applied onto at least one of said pedals (34).

4. An apparatus according to claim 3, **characterised in that** the sensor (60) is arranged also for measuring the horizontal component of the force, which is perpendicular to the axis of rotation of the crankset (30).

5. An apparatus according to any of claims 1 to 4, further including a chain (44) connecting the crankset (30) to the braking device and a sensor (64) arranged for measuring the tension of said chain.

6. An apparatus according to any of claims 1 to 5, **characterised in that** a sensor (58) is associated with the handlebars (52).

7. An apparatus according to claim 5, **characterised in that** said sensor includes a plurality of membranes (58a, 58b, 58c) each provided with pressure sensors, arranged at each of the bearing points of the hands on the handlebars.

8. An apparatus according to any of claims 1 to 7, **characterised in that** a sensor is arranged on the saddle (38) and includes a membrane (72) provided with a plurality of sensors distributed over the surface of the saddle, to allow a local pressure measurement.

9. An apparatus according to any of claims 1 to 8, further including a position detector (66) cooperating with the crankset (30) in order to discover its angular position with reference to the support (10).

## Patentansprüche

1. Messvorrichtung zum Einstellen der Abmessungen der Bestandteile eines Fahrrads auf seinen Benutzer in einer Bauweise, welche
- einen als Basis dienenden Sockel (10),
- einen auf dem Sockel angeordneten Rahmen (12) und, auf dem Rahmen angebracht,
- einen mit einer Lenkstange (52) zum Abstützen der Arme versehenen Träger (50),
- einen Sattel (38) zum Abstützen des Gesäßes,
- eine mit Pedalen (34) versehene Tretkurbel (30) zum Abstützen der Füße, die um eine horizontale Achse drehbar gelagert ist,
- eine kinematisch mit der Tretkurbel (30) verbundene Brems- und Messvorrichtung (42), um den von dem Benutzer ausgeübten Kraftaufwand einzustellen und zu messen, und
- Einstelleinrichtungen (20c, 24c, 26c) für wenigstens einen Teil der Größenabmessungen der Vorrichtung aufweist,
**dadurch gekennzeichnet, dass** sie außerdem wenigstens einen auf einem der Auflagepunkte angeordneten Kraftsensor (58, 60, 62) und eine Steuerelektronik (56) aufweist, die mit dem Kraftsensor verbunden ist, um die durch den Benutzer angelegte Kraft und ihre Entwicklung in der Zeit zu bestimmen.

2. Vorrichtung nach Anspruch 1, **dadurch gekennzeichnet, dass** ein Sensor (60) so ausgebildet ist, dass er mit der Tretkurbel (30) zusammenwirkt.

3. Vorrichtung nach Anspruch 2, **dadurch gekennzeichnet, dass** die Vorrichtung außerdem eine abnehmbare Abstützung (40) für die Tretkurbel aufweist und dass der Sensor (60) so ausgebildet ist, dass er wenigstens die vertikale Komponente der statisch auf wenigstens eines der Pedale (34) ausgeübten Kraft misst.

4. Vorrichtung nach Anspruch 3, **dadurch gekennzeichnet, dass** der Sensor (60) so ausgebildet ist, dass er auch die horizontale Komponente der Kraft misst, die senkrecht zur Drehachse der Tretkurbel (30) ist.

5. Vorrichtung nach einem der Ansprüche 1 bis 4, **dadurch gekennzeichnet, dass** sie außerdem eine Kette (44), die die Tretkurbel (30) mit der Bremsvorrichtung verbindet, und einen Sensor (64) zum Messen der Spannung der Kette aufweist.

6. Vorrichtung nach einem der Ansprüche 1 bis 5, **dadurch gekennzeichnet, dass** der Lenkstange (52) ein Sensor (58) zugeordnet ist.

7. Vorrichtung nach Anspruch 5, **dadurch gekennzeichnet, dass** der Sensor eine Vielzahl von Membranen (58a, 58b, 58c) aufweist, die jeweils mit Drucksensoren versehen sind, die an jedem der Auflagepunkte der Hände auf der Lenkstange angeordnet sind.

8. Vorrichtung nach einem der Ansprüche 1 bis 7, **dadurch gekennzeichnet, dass** ein Sensor auf dem Sattel (38) angeordnet ist und eine Membran (72) aufweist, die mit einer Vielzahl von auf der Satteloberfläche verteilten Sensoren versehen ist, um eine lokale Druckmessung zu ermöglichen.

9. Vorrichtung nach einem der Ansprüche 1 bis 8, **dadurch gekennzeichnet, dass** sie außerdem einen Positionsdetektor (66) aufweist, der mit der Tretkurbel (30) zusammenwirkt, um ihre Winkelposition bezogen auf den Träger (10) zu bestimmen.
